# EUROPEAN PATENT APPLICATION

(11) **EP 2 492 814 A1**
(43) Date of publication of application: **29.08.2012**
(21) Application number: 12001292.7
(22) Date of filing: 27.02.2012
(51) Int. Cl.: G06F 11/36, H04L 29/08

(54) **Managing test automation**

(30) Priority: 28.02.2011 CN 201110047122; 16.08.2011 US 201113210850
(71) Applicant: SAP AG, 69190 Walldorf (DE)
(72) Inventor: Li, Zicheng, 69190 Walldorf (DE); Bai, Xue, 69190 Walldorf (DE)
(74) Representative: Müller-Boré & Partner Patentanwälte

(57) **Abstract**

Systems, methods and computer program products relating to test automation management are described. In some aspects, a request for initiating at least one test automation task is received by an electronic computing device from a mobile device. A web service associated with the received request and at least one automation tool are identified. At least one automation tool is launched in response to the received request. The launched at least one automation tool executes at least one test script based on the received request, the at least one test script can include a sequence of instructions. Test data are loaded based on at least a portion of the executed a sequence of instructions for the at least one test automation task, and one or more test results associated with the executed at least one test script are stored.

## Description

### CLAIM OF PRIORITY

This application claims priority under 35 U.S.C. §119 to Chinese Patent Application No. 201110047122.2, filed February 28, 2011, the entire disclosure of which is incorporated herein by reference.

### TECHNICAL FIELD

The present disclosure relates to managing test automation.

### BACKGROUND

Testing plays an important role in software and hardware development. The efficiency, effectiveness and scope of testing can be improved by using test automation tools implemented on an electronic device. Example test automation tools include Quick Test Professional (QTP), Test Partner, WinRunner, Silk Test, e-CATT, and LoadRunner, among others. Test automation tools can be used for developing, executing, displaying test scripts, and other test control and test reporting related functions. Web service can be used as a method of communication between electronic devices.

### SUMMARY

This disclosure provides various embodiments of systems, software and methods for managing test automation. A request for initiating at least one test automation task is received from a mobile device. A web service associated with the received request is identified. The identified web service is also associated with at least one test automation tool. The at least one automation tool is launched in response to the received request and at least one test script based on the received request is executed by the at least one test automation tool. In some instances, the at least one test script includes a sequence of instructions. Test data based on at least a portion of the executed sequence of instructions is loaded by the test automation tool for the at least one test automation task. Further, one or more test results associated with the executed at least one test script are stored.

While generally described as computer-implemented software that processes and transforms the respective data, some or all of the aspects may be computer implemented methods or further included in respective systems or other devices for performing this described functionality. The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

FIGURE 1 illustrates an example system environment for managing test automation.

FIGURE 2A is a swim lane diagram illustrating an example test automation process initiated by a mobile device user.

FIGURE 2B is a swim lane diagram illustrating an example test results viewing process.

FIGURE 3A is a flowchart illustrating an example process for initiating a test automation task from a mobile device.

FIGURE 3B is a flowchart illustrating an example process for viewing a test result from a mobile device.

FIGURE 4 is an flowchart illustrating an example process for managing test automation using a web service.

FIGURE 5 is a schematic showing an example user interface presented on a mobile device for initiating test automation.

Like reference symbols in the various drawings indicate like elements.

### DETAILED DESCRIPTION

Test automation can be used to control the execution of tests for software development and/or other test-related tasks. Web services can be used as a method of communication between electronic devices, for example, between a local electronic device and a remote electronic device. In some instances, a web service can be exposed to the remote electronic device to perform at least a subset of test automation management tasks. Further, the exposed web service can assist a local electronic device including a mobile device (e.g., a smartphone or a laptop) to perform at least a subset of test automation management tasks.

In the present disclosure, systems, methods and computer-implemented software for managing test automation are described. In one instance, the test automation management process starts with a user initiating, from a mobile device, at least one test automation task. The initiating process can include sending from the mobile device a request for executing the at least one test automation task on a remote electronic device. A web service is developed and exposed to the remote electronic device. After receiving the request from the mobile device, the web service is operable to launch a test automation tool in response to the received request. The test automation tool is operable to load one or more test scripts based on the requested at least one test automation task and execute the loaded one or more test scripts. Test data can also be loaded to execute the at least one test automation task based on instruction(s) included in the test scripts. The mobile device can also be operable to send a request to view the test result(s). The web service exposed on the remote electronic device can be further configured to show the test results. After completion of the execution of the one or more test scripts, the test result(s) can be presented on the mobile electronic device, presented on a display coupled to the remote electronic device, and/or stored to a memory.

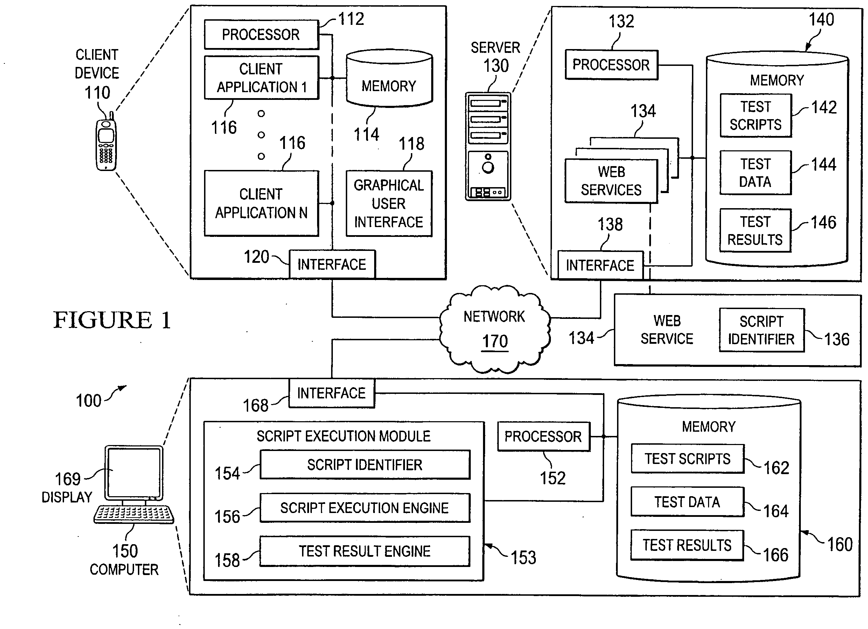

Turning to the illustrated example, FIGURE 1 illustrates an example system environment 100 -for managing test automation. At a high level, the example system includes or is communicably coupled with a client device 110, a server 130, and a computer 150, at least some of which communicate across a network 170. In some implementations, server 130 and computer 150 can be co-located or execute on the same physical machine, server, computer, or system. In still other instances, the functionality of the server 130 and the computer 150 can be combined into a single component or system as opposed to the two systems illustrated in FIGURE 1.

Although illustrated as a single client device 110 in FIGURE 1, two or more client devices may operate in the test automation management environment 100. Each client device 110 may be any computing device operable to connect to or communicate with at least the server 130, the computer 150, and/or the network 170 using a wireline or wireless connection. In the illustrated example 100, the client device 110 can include a processor 112, a memory 114, a plurality of client applications 116, a graphic user interface (GUI) 118 and an interface 120. In general, each client device 110 comprises an electronic computing device operable to receive, transmit, process, and store any appropriate data associated with the environment 100 of FIGURE 1. It will be understood that there may be any number of client devices 110 associated with, or external to, environment 100. For example, while illustrated environment 100 includes a single client device 110, alternative implementations of environment 100 may include a plurality of client devices communicably coupled to the server 130 and/or the computer 150, or any other electronic devices for the purposes of the environment 100. Additionally, there may also be one or more additional client devices 110 external to the illustrated portion of environment 100 that are capable of interacting with the environment 100 via the network 170. Further, the term "client device," "client," and "user" may be used interchangeably as appropriate without departing from the scope of this disclosure. Moreover, while each client device 110 is described in terms of being used by a single user, this disclosure contemplates that many users may use one user device, or that one user may use multiple user devices. In some implementations, the client device 110 may be a mobile device used by an end-user to communicate information using radio technology and performing a plurality of computing tasks. Mobile device 110 may also be referred to as mobile electronic device, user device, mobile station, subscriber station, or wireless terminal. A mobile device 110 may be a cellular phone, personal data assistant (PDA), smartphone, laptop, tablet personal computer (PC), Session Initiation Protocol (SIP) phones, touch screen terminal, or any other suitable wireless communication devices capable of performing a plurality of tasks including communicating information using a radio technology. For example, each client device 110 may comprise a mobile device that includes an input device, such as a keypad, touch screen, microphone, or other module that can accept user input information, and an output module that conveys information associated with the operation of the server 130 (and client application(s) 116), the computer 150 or the client device 110 itself, including digital data, visual information, instructions, the client application 116, or the GUI 118.

The processor 112 executes one or more client applications 116 on the client device 110. Although illustrated as a single processor 112 in FIG. 1, two or more processors may be used according to particular needs, desires, or particular implementations of the environment. Each processor 112 may be a central processing unit (CPU), a blade, an application specific integrated circuit (ASIC), a field-programmable gate array (FPGA), or another suitable component. Generally, the processor 112 executes instructions and manipulates data to perform the operations of client device 110 and, specifically, the one or more plurality of client applications 116. The processor 112 executes the functionality required to receive and respond to requests from the client devices and their respective client applications, as well as the functionality required to perform the other operations of the client application 116. Regardless of the particular implementation, "software" may include computer-readable instructions, firmware, wired or programmed hardware, or any combination thereof on a tangible and non-transitory medium operable when executed to perform at least the processes and operations described herein. Indeed, each software component may be fully or partially written or described in any appropriate computer language including C, C++, Java, Visual Basic, assembler, Perl, any suitable version of 4GL, as well as others. It will be understood that while portions of the software illustrated in FIGURE 1 are shown as individual modules that implement the various features and functionality through various objects, methods, or other processes, the software may instead include a number of sub-modules, third-party services, components, libraries, and such, as appropriate. Conversely, the features and functionality of various components can be combined into single components as appropriate.

A computer program (also known as a program, software, software application, script, or code) executed by the processor 112 can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network 170.

Aspects of the processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors 112 suitable for the execution of a computer program include, by way of example, both general and special purpose microprocessors, and any one or more processors of any kind of digital computer. Generally, a processor 112 will receive instructions and data from a read only memory or a random access memory or both. The essential elements of a computer are a processor 112 for performing actions in accordance with instructions and one or more memory devices for storing instructions and data. Generally, a computer will also include, or be operatively coupled to receive, data from or transfer data to, or both, one or more mass storage devices for storing data, e.g., magnetic, magneto optical disks, or optical disks. However, a computer need not have such devices. Devices suitable for storing computer program instructions and data include all forms of non-volatile memory, media and memory devices, including by way of example, semiconductor memory devices, e.g., EPROM, EEPROM, and flash memory devices; magnetic disks, e.g., internal hard disks or removable disks; magneto optical disks; and CD ROM and DVD-ROM disks. The processor 112 and the memory 114 can be supplemented by, or incorporated in, special purpose logic circuitry.

The client device 110 can also include memory 114. Memory 114 may be used to store data, instructions, and/or client applications 116. Memory 114 may include any memory 114 or database module and may take the form of volatile or non-volatile memory including, without limitation, magnetic media, optical media, random access memory (RAM), read-only memory (ROM), removable media, or any other suitable local or remote memory component. Memory 114 may store various objects or data, including classes, frameworks, applications, backup data, business objects, jobs, web pages, web page templates, database tables, repositories storing business and/or dynamic information, and any other appropriate information including any parameters, variables, algorithms, instructions, rules, constraints, or references thereto associated with the purposes of the server and its one or more client applications 116. Additionally, memory 114 may include any other appropriate data, such as VPN applications, firmware logs and policies, firewall policies, security or access logs, print or other reporting files, as well as others.

Memory 114 can also store instructions (e.g., computer code) associated with an operating system, computer applications, and/or other resources. The memory 114 can also store application data and data objects that can be interpreted by one or more applications and/or virtual machines running on the computing system. The memory 114 may store additional information, for example, files and instruction associated with an operating system, device drivers, archival data, and/or other types of information.

Each client device 110 can include one or more client applications 116 associated with the web service executed at the server. In particular, the client application 116 can include any software (e.g., a web browser), a user interface which can be configured to initiate at least one test automation task, or a software application that enables the client device 110 (or a user thereof) to display and interact with one or more of the web services 134 executed at the server 130. The web services 134 are web-based applications, and the client application 116 may be specific a application dedicated to use with a particular web service 134, a general web browser or user interface, with adequate functionality to interact with the web service 134, or any other appropriate software.

Further, the illustrated client device 110 may also have a GUI 118 comprising a graphical user interface operable to interface with at least one client application 116 for any suitable purpose, including generating a visual representation of the client application 116 (in some instances, the client device's web browser) and the interactions with the web service 134, including generating and sending test automation requests and interpreting and presenting the responses received from the web service 134 in response to the requests sent by the client application 116. Generally, through the GUI 118, the user is provided with an efficient and user-friendly presentation of data provided by or communicated within the system. The term "graphical user interface," or GUI, may be used in the singular or the plural to describe one or more graphical user interfaces and each of the displays of a particular graphical user interface. Therefore, the GUI 118 can represent any graphical user interface, including but not limited to, a web browser, touch screen, or command line interface (CLI) that processes information in environment 100 and efficiently presents the information results to the user. In general, the GUI 118 may include a plurality of user interface elements, some or all associated with the client application 116, such as interactive fields, pull-down lists, and buttons operable by the user at client device 110. These and other user interface elements may be related to or represent the functions of the client application 116, as well as other software applications executing at the client device 110. In some instances, the GUI 118 may be a part of or the entirety of the client application 116, while also merely a tool for displaying the visual representation of the client device and web service's 134 actions and interactions. In some instances, the GUI 118 and the client application 116 may be used interchangeably, particularly when the client application 116 represents a web browser or user interface associated with the web service 134.

In the present implementation, and as shown in FIGURE 1, the client device 110 also includes an interface 120. The interface 120 is used by the client device 110 for communicating with other systems in a client-server or other distributed environment (including within environment 100) connected to the network 170 (e.g., client device 110, as well as other systems communicably coupled to the network 170). Generally, the interface 120 comprises logic encoded in software and/or hardware in a suitable combination and operable to communicate with the network 170. More specifically, the interface 120 may comprise software supporting one or more communication protocols associated with communications such that the network 170 or interface's hardware is operable to communicate physical signals within and outside of the illustrated environment 100. In some instances, the interface's hardware may include wireless transceivers and antenna (not shown). The wireless transceivers can include both the transmitter circuitry and the receiver circuitry. The wireless transceivers may be responsible for up-converting a baseband signal to a passband signal or vice versa. The components of wireless transceivers may include a digital to analog converter/analog to digital converter, amplifier; frequency filter and oscillator. The antenna is a transducer which can transmit and/or receive electromagnetic waves. The antenna can convert electromagnetic radiation into electric current, or vice versa. The antenna is generally responsible for the transmission and reception of radio waves, and can serve as the interface between the transceiver and the wireless channel.

The illustrated example system includes a server 130. In the present implementation, and as shown in FIGURE 1, the server 130 includes a processor 132, one or more web services 134, an interface 138, and a memory 140. In general, the server 130 is any server that stores one or more web services 134, where at least a portion of the web services 134 is executed via requests sent by and responses sent to users or client devices within and communicably coupled to the illustrated environment 100 of FIGURE 1. Web service 134 can be a hosted application on the server 130. In some instances, the server 130 may store a plurality of different web services 134 (or instances thereof), while in other instances, the server 130 may be a dedicated server meant to store and execute only a single web service 134. In some instances, the server 130 may comprise a web server, where the web services 134 represent one or more web-based applications accessed and executed via network 170 by the client device(s) 110 of the system to perform the programmed tasks or operations of the web service 134. At a high level, the server 130 comprises an electronic computing device operable to receive, transmit, process, store, or manage data and information associated with the environment 100. Specifically, the server 130 illustrated in FIGURE 1 is responsible for receiving application requests from one or more client applications 116 associated with the client devices 110 operating in the environment 100 and responding to the received requests by processing said requests in the associated web service 134, and sending the appropriate response from the web service 134 back to the requesting client application 116. In addition to requests from the external client devices 110 illustrated in FIGURE 1, requests associated with one or more of the web services 134 may also be sent from internal users, external or third-party customers, other automated applications, as well as any other appropriate entities, individuals, systems, or computers. As used in the present disclosure, the term "computer" is intended to encompass any suitable processing device. For example, although FIGURE 1 illustrates a single server 130, environment 100 can be implemented using two or more servers 102, as well as computers other than servers, including a server pool. Indeed, server 130 may be any computer or processing device such as, for example, a blade server, general-purpose personal computer (PC), Macintosh, workstation, UNIX-based workstation, or any other suitable device. In other words, the present disclosure contemplates computers other than general purpose computers, as well as computers without conventional operating systems. Further, illustrated server 130 may be adapted to execute any operating system, including Linux, UNIX, Windows, Mac OS, or any other suitable operating system. According to one embodiment, server 130 may also include or be communicably coupled with a mail server.

One or more web services 134 can be stored in memory 140 and executed by processor 132. At a high level, each of the one or more web services 134 is any application, program, module, process, or other software that may execute, change, delete, generate, or otherwise manage information according to the present disclosure, particularly in response to and in connection with one or more requests received from the illustrated client devices 110 and their associated client applications 116. In certain cases, only one web service 134 may be located at a particular server 130. In others, a plurality of related and/or unrelated web services 134 may be stored at a single server 130, or located across a plurality of other servers (not shown), as well. In certain cases, environment 100 may implement a composite web service 134. For example, portions of the composite web service 134 may be implemented as Enterprise Java Beans (EJBs) or design-time components may have the ability to generate run-time implementations into different platforms, such as J2EE (Java 2 Platform, Enterprise Edition), ABAP (Advanced Business Application Programming) objects, or Microsoft's .NET, among others. Additionally, the web service 134 may represent web-based applications accessed and executed by client devices 110 or client applications 116 via the network 170 (e.g., through the Internet). Further, while illustrated as internal to server 130, one or more processes associated with a particular web service 134 may be stored, referenced, or executed remotely. For example, a portion of a particular web service 134 may be a web service associated with the application that is remotely called, while another portion of the client application 116 may be an interface object or agent bundled for processing at a remote client device 110. Moreover, any or all of the client applications 116 may be a child or sub-module of another software module or enterprise application (not illustrated) without departing from the scope of this disclosure. Still further, portions of the client application 116 may be executed by a user working directly at server 130, as well as remotely at client device 110.

Similar to the client device 110, the illustrated server 130 also includes a processor 132, an interface 138 and a memory 140. It will be understood that the server 130 may include more than one processor, interface and memory depending on particular needs, desires, or embodiments of environment 100. Further, the processor 132, interface 138 and memory 140 included in the server 130 may also be similar or different in nature to that of the client device's 110 respective processor 112, interface 120 and memory 114.

In certain implementations, the software and/or hardware components included in the server 130 can perform test automation related functions. For example, the memory 130 can store information including one or more test scripts 142, test data 144 and one or more test results 146. In some instances, test script 142 can be a software program including a sequence of instructions for executing one or more test automation tasks. Test data 144 can be any test-related data received from the client device 110 and/or stored in memory 140. Test results 146 can be generated and stored in memory 140 associated with the execution of the test scripts 142. For example, web service 134 can include one or more script identifiers 136. The one or more script identifiers 136 can help the web service(s) 134 identify one or more corresponding test scripts 142 to be executed for the test automation task. In some implementations, web service 134 can be configured to launch one or more test automation tools in response to request(s) from the client device 110, and test scripts 142 can be loaded by the test automation tool based on the test automation tasks associated with the request(s). Test data are loaded based on the instructions given in the test scripts 142. In some implementations, web service 134 is also operable to provide to the client device 110 indication(s) on whether the launch of test automation tool is successful.

In the example system 100 illustrated in FIGURE 1, a computer 150 is coupled to the server 130 and the client device 110 through the network 170. The computer 150 can have hardware and/or software components including a processor 152, a memory 160, an interface 168, a display 169 and a script execution module 153. The script execution module 153 can further include one or more script identifiers 154, a script execution engine 156 and a test result engine 158.

In general, the computer 150 can be any electronic computer device operable to receive, transmit, process, and store any appropriate data associated with the environment 100 of FIGURE 1. It will be understood that there may be any number of computers 150 associated with, or external to, environment 100. As used in this disclosure, computer 150 is intended to encompass a personal computer, touch screen terminal, workstation, network computer, server, one or more processors within these or other devices, or any other suitable processing device. For example, each computer 150 may include an input device, such as a keypad, touch screen, mouse, or other device that can accept user information, and an output device, (e.g., a display 169) that conveys information associated with the operation of the server 130, the computer 150 and/or the client device 110 itself, including digital data, visual information, the client application 116, or the GUI 118. Both the input and output device may include fixed or removable storage media such as a magnetic storage media, CD-ROM, or other suitable media to both receive input from and provide output to users of the client device 110 and/or present the output on the display 169.

The processor 152, memory 160 and interface 168 included in the computer 150 can be similar or different in nature to their respective counterparts in the client device 110 and the server 130. In some implementations, the computer 150 can host test automation functions substantially similar to the server 130. For example, although the web services 134 are included in the server 130 in the illustrated example 100, the web services 134 can also be hosted by the computer 150. In other words, the web services 134 can be used by the computer 150 to perform operations in response to request(s) sent from the client device 110 via the network 170. For example, the request from the client device 110 may be associated with a particular web service 134, which can then initiate one or more operations at the computer 150 associated with the test automation. Additionally, memory 160 included in the computer 150 can be used to store test scripts 162, test data 164, and test results 166. In some instances, the test scripts 162 and test data 164 may be loaded and/or executed by a test automation tool launched by one or more web services implemented on the computer 150, while in other instances, the test scripts 162 and test data 164 may be loaded through the network 170 and/or executed by the test automation tool via the script execution module 153 as launched or initiated by one or more web services implemented remotely on the server 130.

The computer 150 can also include a script execution module 153. The script execution module 153 can be used to perform operations relating to executing the test scripts. In some instances, the script execution module 153 is a test automation tool. The script execution module 153 can further comprise a script identifier 154, a script execution engine 156 and a test result engine 158. In a particular implementation, instruction(s) from web service 134 is received by the script execution module 153 for executing a test script 142 stored in the server 130 or a test script 162 stored in the computer 150. The script execution module 153 determines one or more test scripts to be executed by comparing the script identifier 136 included in or associated with the web service 134 and the script identifier 154 included in or associated with the script execution module 153 for a match. The matched test scripts 142 stored in the server 130 or the test scripts 162 stored in the computer 150 are loaded to the script execution module 153 and executed by the script execution engine 156. Test result engine 158 can be operable to store the test results to the memory 140 in the server 130 or the memory 160 in the computer 150 depending on the origin of the test script or otherwise specified by the web service 134. In some instances, test result engine 158 may also be responsible for sending to the client device 110 an indication of whether the test results are ready to be viewed, presenting the test result to the client device 110 through the network 170, and/or presenting the results on a display 169 coupled to the computer 150. It will be understood that the script execution module 153 may be located in the server 130, the computer 150, or both, depending on the particular test automation implementation.

In the illustrated example system, the communications between the client device 110, the server 130 and the computer 150 are through a network 170. Generally, the network 170 facilitates wireless or wireline communications between the devices operated in the environment 100, as well as with any other local or remote devices communicably coupled to the network 170 but not illustrated in FIGURE 1. The network 170 is illustrated as a single network in FIGURE 1, but may be a continuous or discontinuous network without departing from the scope of this disclosure, so long as at least a portion of the network may facilitate communications between senders and recipients. The network 170 may be all or a portion of an enterprise or secured network, while in another instance, at least a portion of the network 170 may represent a connection to the Internet. In some instances, a portion of the network 170 may be a virtual private network (VPN), such as, for example, the connection between the client device 110 and the server 130. Further, all or a portion of the network 170 can comprise either a wireline or wireless link. Example wireless links may include 802.11a/b/g/n, 802.20, WiMAX, Bluetooth and/or any other appropriate wireless link. In other words, the network 170 encompasses any internal or external network, networks, sub-network, or combination thereof operable to facilitate communications between various computing components inside and outside the illustrated environment. The network 170 may communicate, for example, Internet Protocol (IP) packets, Frame Relay frames, Asynchronous Transfer Mode (ATM) cells, voice, video, data, and other suitable information between network addresses. The network 170 may also include one or more local area networks (LANs), radio access networks (RANs), metropolitan area networks (MANs), wide area networks (WANs), all or a portion of the Internet, and/or any other communication system or systems at one or more locations.

While FIGURE 1 is described as containing or being associated with a plurality of elements, not all elements illustrated within environment 100 of FIGURE 1 may be utilized in each alternative implementation of the present disclosure. Additionally, one or more of the elements described herein may be located external to environment 100, while in other instances, certain elements may be included within or as a portion of one or more of the other described elements, as well as other elements not described in the illustrated implementation. Further, certain elements illustrated in FIGURE 1 may be combined with other components, as well as used for alternative or additional purposes, in addition to those purposes described herein.

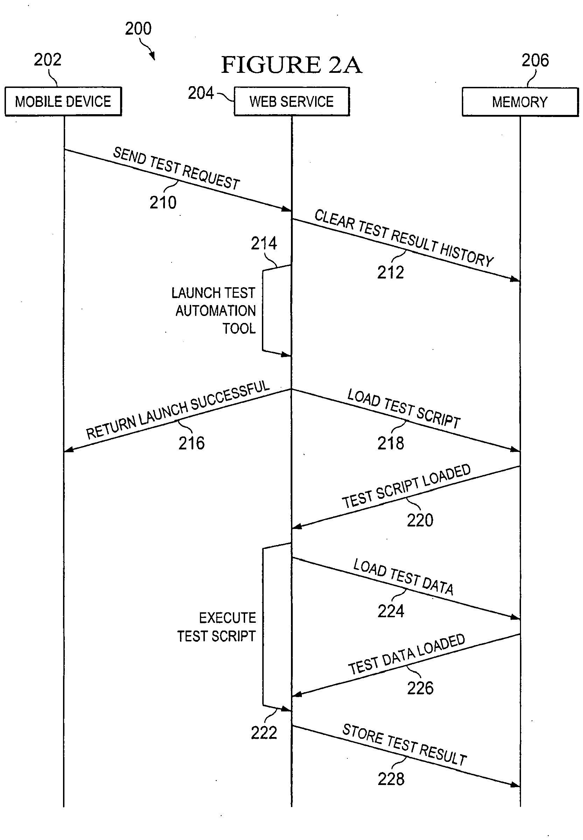

FIGURE 2A is a swim lane diagram illustrating an example test automation process 200 initiated by a mobile device user. In the illustrated diagram, hardware/software components used for performing test automation include at least one mobile device (or client device) 202, a web service 204, and a memory 206. It is to be understood that as illustrated in the previous description, web services 204 are operated or executed by one or more processors. It is also to be understood that although only the mobile device 202, the web service 204, and the memory 206 are explicitly shown in FIGURE 2A, other hardware/software (e.g., the hardware/software illustrated in the description of FIGURE 1) for test automation management may be involved in the example process 200.

At 210, a mobile device 202 can send a request to a web service 204 to perform a test automation task. The mobile device 202 can be any client device previously described in the illustration of FIGURE 1. The request sent by the mobile device 202 may include a web service identifier, a test script identifier, and/or other information related to the test automation task. In some instances, the request may be directed to a particular network or IP address associated with a particular web service or test script. The web service 204 may be implemented on a server or a computer and executed by one or more processors thereof.

At 212, the web service 204 can be configured to send an instruction to clear history and data stored in the memory. Clearing the history can include clearing previous test results stored in the memory. Web service 204 may send instruction(s) to clear all test results stored in the memory or a portion of the test results that are previously generated for the same test automation task. In some instances, test results may be labeled or identified according to a particular instance, with the new test results being provided a new instance identifier, with information on previous testing data being kept stored in memory. Alternatively, instead of clearing the previous test results, the instructions may instead be to archive the previous test results into a test data repository or other long-term storage mechanism or medium.

At 214, the web service 204 can instruct to launch a test automation tool. The launch of the test automation tool is in response to the request received from the mobile device 202. Example test automation tools may include Quick Test Professional (QTP), Test Partner, WinRunner, Silk Test, e-CATT, and LoadRunner. In some instances, the test automation tool may already have been launched when the request is received. Accordingly, the web service can directly continue to perform operation at 216.

At 216, the web service 204 can be configured to generate an indication indicating the successful launch of the test automation tool, and send the indication to the mobile device 202. If the launch is unsuccessful, the web service 204 can continue to attempt to launch the test automation tool. In some instances, an indication can be sent to the mobile device 202 to indicate the failure of a launching attempt. The web service 204 can continue to attempt to launch the test automation tool until successful, or, in some instances, until a predetermined number of attempts have been made without success.

At 218, the web service 204 can send instructions to the launched test automation tool to load one or more test scripts from memory 206. In some implementations, the one or more test scripts to be loaded are based on the test automation task requested by the mobile device 202 user. In some implementations, information on the one or more test scripts to be loaded is identified by the web service from the received request from the mobile device 202. The memory 206 may be included in a computer, a server, or any other electronic computing devices communicably coupled to the web service 204. The test scripts can be stored in one or more memories 206 located in one or more electronic computing devices.

At 220, at least a portion of the one or more test scripts is loaded by the test automation tool based on the instructions of the web service 204. At 222, at least a portion of the one or more test scripts is executed. The test scripts can include a sequence of instructions relating to the requested test automation task. At 224, the web service 204 can send instructions requesting test data to be loaded based on the execution of at least a portion of the instructions given in the test scripts. The test data can be stored in one or more memories 206 located in one or more electronic computing devices. In some instances, the test data is loaded based on the executed instruction(s) included in the test scripts.

At 226, the test data is loaded (or otherwise made available to the web service 204). Although loading data 224 and data loaded 226 are illustrated as one round of operations associated with the web service 204 and the memory 206, in some instances, the test data can be loaded by the test automation tool based on the request sent by the mobile device 202 prior to the execution of the one or more test scripts. In some instances, the process of loading data and data loaded can be executed more than one time based on the instructions of the executed one or more test scripts.

At 228, the test results are stored to the memory 206. In some instances, the test results are stored to the memory 206 upon the completion of the test script execution. In some instances, the generated test results can be stored to the memory 206 along with the execution of the test script.

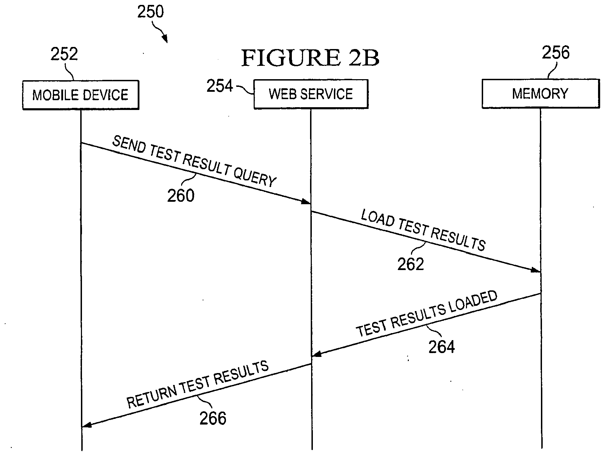

FIGURE 2B is a swim lane diagram illustrating an example process 250 for viewing test results. Similar to FIGURE 2A, web services 254 are operated or executed by one or more processors. Further, although only mobile device 252, web service 254 and memory 256 are explicitly shown in FIGURE 2B, other hardware/software (e.g., the hardware/software illustrated in the description of FIGURE 1) for test automation management may be involved in the example process 250. In certain implementations, one or more of the mobile devices 252, web service 254 and memory 256 used in the example test result viewing process 250 may be the same with the corresponding mobile device 202, web service 204 and memory 206 used in the example process 200 for initiating testing.

At 260, a query is sent from a mobile device 252 to a web service 254 to view the result of a previously initiated test automation task. The query sent by the mobile device 252 may include a web service identifier, a test automation task identifier, and other information related to the test automation task and a request to view the results of the test. The web service 254 may be implemented on a server or a computer and executed by one or more processors thereof.

At 262, the web service 254 can be configured to load test results from memory 256. The test results to be loaded can be based on the query sent by the mobile device 252. One or more memories 256 located in one or more electronic computing devices can be used to store the test results.

At 264, the test results are loaded by the web service 254. In some instances, the test results are loaded when all the test results associated with the test automation task are stored in the memory 256. In some instances, a portion of the test results can be loaded and stored in the memory 256. In some instances, the web service 252 can send an indication to the mobile device if no test results are loaded from the memory 256, such as when the test results associated with the request are not available or the automation process has not completed. At 266, the web service 254 can operate to return the loaded test results to the mobile device 252.

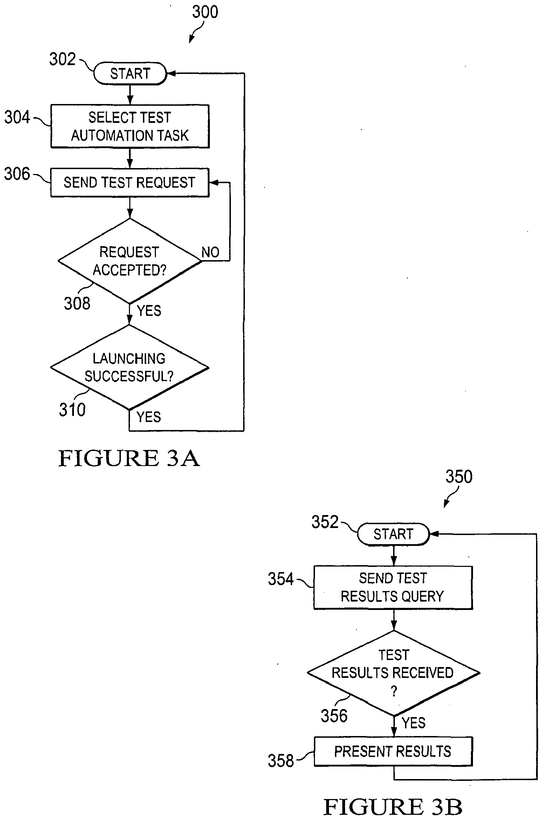

FIGURE 3A is an example flowchart 300 illustrating initiating a test automation task from a mobile device. The process starts at 302. At 304, a first user can select one or more test automation tasks from a plurality of automation tasks. The selection may be through a user interface (e.g., a GUI) presented on a first mobile device, or a web application accessible from a web browser presented on the first mobile device.

At 306, a request associated with the selected test automation task is sent to the web service. The request may include information related to identifying a web service, test automation tool and/or test script associated with the selected test automation task. In certain implementations, the request may include at least a portion of test data and/or parameters associated with the selected test automation task. In certain implementations, the request for initiating one or more test automation tasks can be directly generated by the first user without selecting from a plurality of test automation tasks. In some implementations, a web server can be preconfigured to perform operations in response to the received request.

At 308, a decision is made based on whether the request is accepted. If the request is not accepted, an indication may be received by the first mobile device to resend a test request to the web service, with process 300 returning to 306. Otherwise, the process 300 continues to 310.

At 310, a decision is made based on whether the test automation tool is successfully launched. An indication may be received by the first mobile device if the test automation tool is successfully launched.

FIGURE 3B is an example flowchart 350 illustrating viewing a test result from a mobile device. The process starts at 352. At 354, a second user can send a query to the web service for the test results associated with a previously initiated test automation task. In some instances, the second user and the first user who initiated the test automation task are the same. The query may be generated through a second user interface presented on a second mobile device or a web application accessible from a local web browser presented on the second mobile device. In some instances, the second mobile device and the first mobile device which the previous test automation task is initiated from are the same, including where the first and second users are not the same, but use the same mobile device. In some implementations, an authentication process may be performed to check the access rights of the test results for the second user. For example, a password or answer to a security question may be entered by the second user in order to gain access to the test results, as well as other authentication techniques. The second user interface may also be configured to receive and/or present the test automation result received from the web service. In some implementations, the second user interface may be a web application where the second user can request the test results to be presented on the local web browser.

At 356, a decision is made based on whether the test results are received. If at least a portion of the test results is received, the process 350 continues to 358. At 358, the test results are presented to the second user through the second user interface on the second mobile device. In some instances, the test results may be presented through a third user interface presented on the second mobile device. The test results may be presented in any form meaningful for the test automation task. For example, the test results may be a Boolean value which indicates pass or false of the test. The result may also be a set of data stored in a document such as an XML or an Excel file. The test results may also be presented on the second mobile device as a figure, a histogram or a SWF file, depending on the functionalities of the web service and/or the second mobile device software/hardware. The test results may also be presented in a form based on the instructions included in the query.

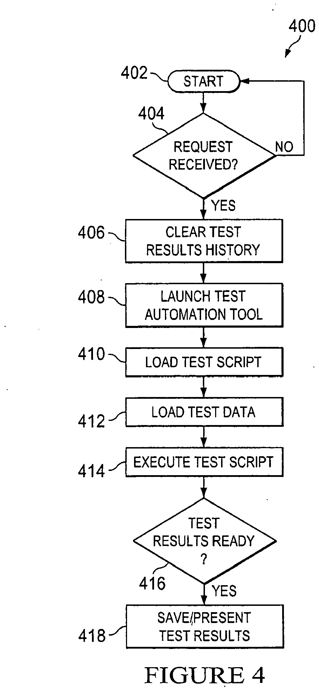

FIGURE 4 is an example flowchart 400 illustrating managing test automation using a web service. As illustrated in the description above, web services may be written in a programming language, such as a Java or Visual Basic script. Web services may be processed by a processor included in a server, a computer or any other electronic computing device. The web services can expose, or be used to call, a test script, which may comprise a script of the same or different programming language as the web service itself, including Visual Basic, Java, or any other suitable scripting language. The example process 400 starts at 402.

At 404, a determination can be made based on whether a test automation request is received. The web service may actively monitor whether a test automation request is received. If a test automation request is received, the process 400 continues to 406. At 406, test results history is cleared. The test results history may include test results of the same or different test automation tasks. In some implementations, the web service may provide instructions to clear all the test results history stored in a memory. In some instances, the web service may provide instructions to clear test results history stored in a portion of memory where test results associated with the requested test automation task are to be stored. The test results to be cleared may be erased, or alternatively, moved to an archival location in memory for later usage.

At 408, a test automation tool can be launched based in response to the received request. At 410, a test script can be loaded, such that the test script can be executed by the test automation tool. The test script may be loaded based on the identification included in the received request. For example, each of the test scripts may include a script identifier. A script identifier can also be determined by the web service based on the information included in the received request. In some instances, the particular web service associated with the request may determine the appropriate test script to be called or executed. The test script can be loaded based on the identification of the web service if the script identifier determined by the web service matches the script identifier included in the test script.

At 412, test data can be loaded by the test automation tool. The test script may be loaded based on the identification included in the received request similar to loading the test script. In some implementations, test data may be loaded based on the instructions included in the test script executed by the test automation tool. At 414, the test script is executed.

At 416, a decision can be made based on whether the test results are generated. If the test results are generated, the process 400 continues to 418. At 418, the test results are saved to memory and/or presented on a display (e.g., a monitor) communicably coupled to the web service. In some implementations, web services may have functionalities including interpreting test results, converting and returning test results in a format meaningful to be understood or based on the indication of the received request.

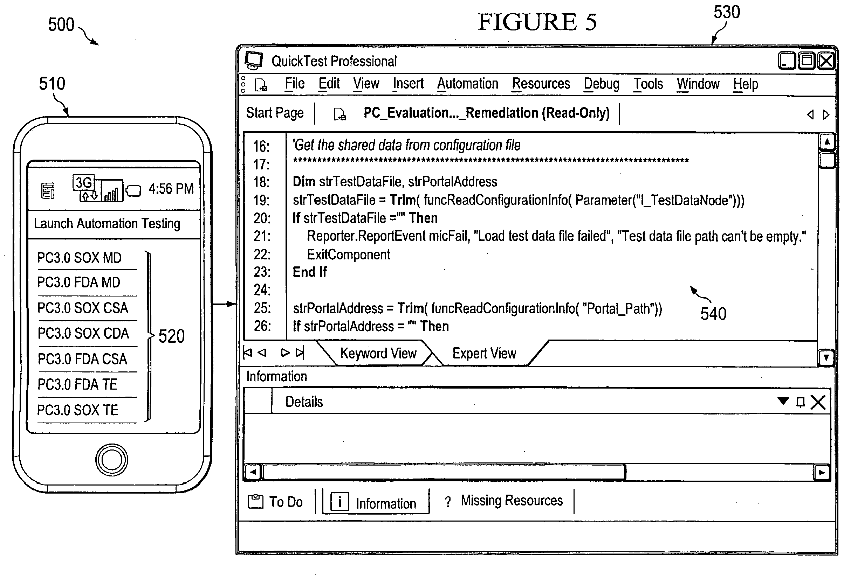

FIGURE 5 is a schematic showing an example user interface 500 presented on a mobile device for initiating test automation. In the particular example, a smart phone using a test automation user interface 510 based on an Android operating system is illustrated as the example user interface. As illustrated in FIGURE 5, a plurality of test automation tasks 520 are presented in the user interface. A smart phone can select one or more test automation tasks from a plurality of test automation tasks 520. A request can be automatically generated based on the selected one or more test automation tasks. Upon receiving the request, a preconfigured web service exposed to a server or a computer can be operable to launch a test automation tool. In the particular example, a Quick Test Professional (QTP) test automation tool 530 is launched. A test script 540 can be loaded by the QTP tool 530 from the memory based on the received request.

While this specification contains many specific implementation details, these should not be construed as limitations on the scope of any that may be claimed, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described components and systems can generally be integrated together in a single product or packaged into multiple products.

In the present disclosure, "each" refers to each of multiple items or operations in a group, and may include a subset of the items or operations in the group and/or all of the items or operations in the group. In the present disclosure, the term "based on" indicates that an item or operation is based at least in part on one or more other items or operations and may be based exclusively, partially, primarily, secondarily, directly, or indirectly on the one or more other items or operations.

A number of embodiments of the invention have been described. Nevertheless, it will be understood that various modifications may be made without departing from the spirit and scope of the invention. Accordingly, other embodiments are within the scope of the following claims.

## Claims

1. A computer implemented method performed by at least one processor for test automation management, the method comprising:
receiving, from a mobile device, a request for initiating at least one test automation task;
identifying a web service associated with the received request and at least one automation tool;
launching the at least one automation tool in response to the received request;
executing, by the launched at least one automation tool, at least one test script based on the received request, the at least one test script including a sequence of instructions;
loading from a first memory, test data for the at least one test automation task, the test data loaded based on at least a portion of the executed sequence of instructions; and
storing to a second memory, one or more test results associated with the executed at least one test script.

2. The method of claim 1, wherein receiving the request further includes receiving the request for the at least one test automation task, the at least one test automation task selected by a user through a first user interface presented on the mobile device.

3. The method of claim 1 or 2, further comprising providing to the mobile device an indicator indicating whether launch of the at least one automation tool is successful.

4. The method of any one of the preceding claims, further comprising clearing at least one previously stored test result from the second memory prior to the execution of the at least one test script.

5. The method of any one of the preceding claims, further comprising:
receiving from a second mobile device a query for the one or more test results; and
sending the one or more test results to a second mobile device in response to the query after completion of the execution of the at least one test script.

6. The method of claim 5, wherein receiving the query further includes receiving the query from the second mobile device, the query initiated through a second user interface presented on the second mobile device, and
wherein the sent one or more test results may be presented on the second user interface.

7. The method of claim 5 or 6, wherein the mobile device and the second mobile device are the same.

8. The method of any one of the preceding claims, further comprising presenting the stored one or more test results on an electronic display communicably coupled to the first memory or second memory that stores the one or more test results.

9. A system for test automation management, the system comprising:
a mobile device;
at least one electronic computing device operable to execute instructions to:
receive, from the mobile device, a request for initiating at least one test automation task;
identify a web service associated with the received request and at least one automation tool;
launch the at least one automation tool in response to the received request;
execute, by the launched at least one automation tool, at least one test script based on the received request, the at least one test script including a sequence of instructions;
load from a first memory, test data for the at least one test automation task, the test data loaded based on at least a portion of the executed sequence of instructions; and
store to a second memory, one or more test results associated with the executed at least one test script.

10. The system of claim 9, wherein receiving the request further includes receiving the request for the at least one test automation task, the at least one test automation task selected by a user through a first user interface presented on the mobile device.

11. The system of claim 9 or 10, the at least one electronic computing device further operable to execute instructions to clear at least one previously stored test result from the second memory prior to the execution of the at least one test script.

12. The system of any one of claims 9 to 11, the at least one electronic computing device operable to execute instructions to:
receive from a second mobile device a query for the one or more test results; and
send the one or more test results to the second mobile device in response to the query after completion of the execution of the at least one test script.

13. The system of any one of claims 9 to 12, wherein receiving the query further includes receiving the query from the second mobile device, the query initiated through a second user interface presented on the second mobile device.

14. The system of any one of claims 9 to 13, wherein the first memory and the second memory are the same.

15. A computer program product for test automation management, the computer program product comprising computer-readable instructions embodied on tangible, non-transient media and operable when executed to perform a method according to any one of claims 1 to 8.
